Europäisches Patentamt

European Patent Office    (11) Publication number:    **0 099 658**

Office européen des brevets    A2

(19)

(12)    # EUROPEAN PATENT APPLICATION

(21) Application number: 83303626.2    (51) Int. Cl.³: **F 23 G 7/06**
//F23L15/04

(22) Date of filing: 23.06.83

(30) Priority: 02.07.82 US 394564

(43) Date of publication of application:
01.02.84 Bulletin 84/5

(84) Designated Contracting States:
DE FR GB IT

(71) Applicant: THE BABCOCK & WILCOX COMPANY
1010 Common Street P.O. Box 60035
New Orleans Louisiana 70160(US)

(72) Inventor: Bohl, Thomas L.
306 Hyder Drive
Madison Ohio 44057(US)

(74) Representative: Cotter, Ivan John et al,
D. YOUNG & CO. 10 Staple Inn
London WC1V 7RD(GB)

(54) Combustion devices.

(57) A combustion device comprises a combustion chamber
(12), means (16) for generating gaseous products of combustion in the combustion chamber, and a passage for the gases
which includes an exhaust (30) which has at least one heat
recovery heat exchanger (18 to 26) therein, the heat exchan-
ger having a surface coated with a catalytic material for
oxidising the gaseous products of combustion to recover
heat therefrom.

Fig 1

1

## COMBUSTION DEVICES

This invention relates to combustion devices, for instance boilers.

At the present time, industrial combustion devices such as boilers and power plants for similar type furnaces are operated such that they can conserve fuel as much as possible. Known ways of conserving fuel in such devices comprise controlling the combustion process with instrumentation that closely controls the fuel and air ratios. However, even with sophisticated control systems, some unburned fuel gases still are wasted up the stack. A typical furnace is operated with excess air to prevent excessive fuel loss and/or smoking. Using excess air involves the disadvantages that it wastes heat by causing large amounts of nitrogen and oxygen to be heated and wastes energy in driving fans.

According to the present invention there is provided a combustion device comprising a combustion chamber, means for generating gaseous products of combustion in the combustion chamber, and passage means connected to the combustion chamber and including an exhaust for the gaseous products of combustion, characterised in that at least one heat recovery heat exchanger is disposed in the passage means and a catalytic material is associated with the heat exchanger for oxidising the gaseous products of combustion to recover heat therefrom.

In a preferred embodiment of the invention described hereinbelow, a heat recovery heat exchanger is provided in one or more passes for the gases of the combustion device, the heat exchanger including a heat exchange surface coated with the catalytic material for oxidising the gaseous products of combustion to recover heat therefrom. By catalysing a large heat exchange surface downstream from a burner or the like, unburned fuel gases will be utilised and the heat transferred to a useful medium, thereby conserving fuel and combating atmospheric pollution.

It has been determined that certain materials catalyse gaseous products of combustion in the presence of oxygen and at temperatures exceeding $204^{\circ}C$ ($400^{\circ}F$). Examples of some of these catalytic materials are platinum, palladium, and nickel. In embodiments of this invention, one or

ORIGINAL

more of the catalytic materials can be located directly adjacent heat exchange surfaces of the heat recovery heat exchanger. The catalytic materials may, for example, be applied by vapour coating or sputtering, electroplating or other suitable methods to a support for an associated heat exchange surface of a heat recovery unit. The invention is particularly applicable for example as coatings for superheater tubes or supports therefor exposed to unburned fuel gases in a gas pass of a boiler. Because such units are generally always operated under excess air conditions, the fuel should be readily oxidised and the resultant energy transferred to the fluid in the heat recovery heat exchanger, resulting in favourable economy of fuel. Electroplating or applying the catalytic material by a vapour coating or sputtering can produce a very thin layer, thereby keeping capital investment low and making the arrangement economically attractive. Since fuels would be catalytically combusted at temperatures lower than flame ignition temperatures, no fire or explosion hazards should exist in such units.

The preferred combustion device embodying the invention and described hereinbelow is simple in design, rugged in construction and economical to manufacture.

The invention will now be further described, by way of illustrative and non-limiting example, with reference to the accompanying drawing, in which:

Figure 1 is a schematic sectional view of a boiler embodying the invention; and

Figure 2 is an enlarged detailed sectional view of a section of one or more gas passages of the boiler shown in Figure 1, indicating economiser or air heater tubes covered with a thin layer of catalyst.

The drawing shows a combustion device 10 which, in the embodiment illustrated, comprises a boiler having a combustion chamber portion 12 leading to a vertically elongate passage 14 for the gaseous products of combustion. Gaseous products of combustion are generated in the combustion chamber 12, for example by burners 16 which are generally operated with some degree of excess air.

One or more heat recovery heat exchangers such as superheaters 18, 20 and 22, an economiser 24 or an air heater 26 are located in one or more passage means 30 leading off from the upper end of the combustion chamber and gas passage 14 and connecting the combustion chamber to a flue exhaust or exhausts or stack.

BAD ORIGINAL

3

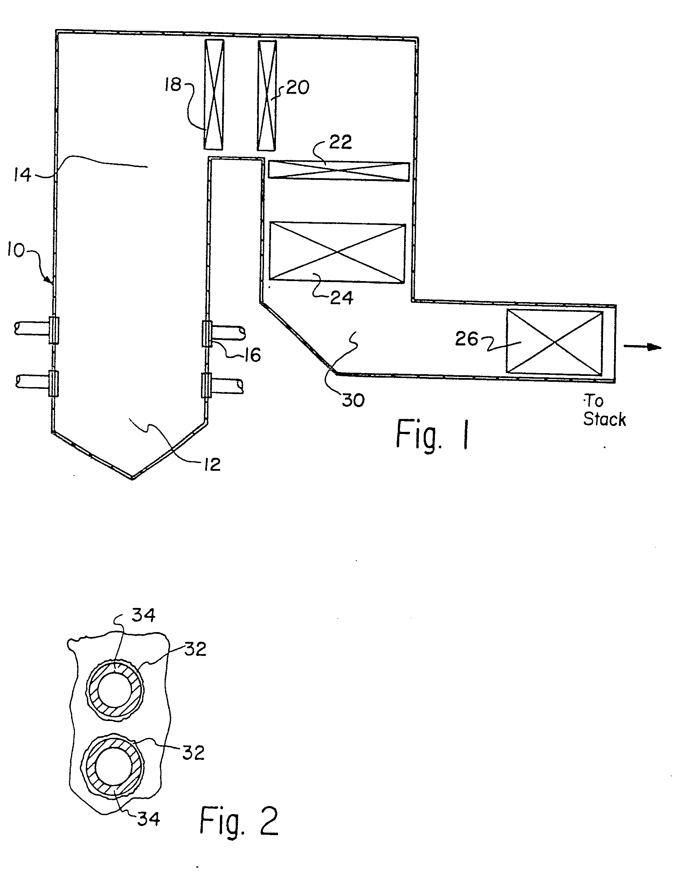

The heat recovery heat exchangers have a catalytic material associated therewith. For example, as shown in Figure 2, a thin layer of catalyst material 32 is coated over one or more of a plurality of tubes 34 of the associated heat recovery heat exchanger or a supporter element alongside of it. In a preferred form, the catalytic material 32 is applied over the tubes 34 by coating the tubes with a thin layer of the catalyst material, such as platinum, palladium and nickel.

BAD ORIGINAL

4

## CLAIMS

1.    A combustion device comprising a combustion chamber (12), means (16) for generating gaseous products of combustion in the combustion chamber (12), and passage means connected to the combustion chamber (12) and including an exhaust for the gaseous products of combustion, characterised in that at least one heat recovery heat exchanger (18 to 26) is disposed in the passage means and a catalytic material (32) is associated with the heat exchanger for oxidising the gaseous products of combustion to recover heat therefrom.

2.    A combustion device according to claim 1, wherein the or a said heat recovery heat exchanger includes tubes (34) having a layer of catalyst (32) thereon.

3.    A combustion device according to claim 1 or claim 2, which comprises a vapour generator having a said heat recovery heat exchanger in the form of a superheater (18, 20, 22) having a catalytic material associated therewith.

4.    A combustion device according to claim 1, claim 2 or claim 3, which comprises a vapour generator having a said heat recovery heat exchanger in the form of an economiser (24) having a catalytic material associated therewith.

5.    A combustion device according to any one of the preceding claims, which comprises a vapour generator having a said heat recovery heat exchanger in the form of an air heater (26).

6.    A combustion device according to claim 1, which comprises a boiler having a vertically elongate gas pass (14) and one or more gas passages (30) leading off from the vertically elongate gas pass (14) and comprising the passage means, the one or more gas passages (30) including a superheater (18, 20, 22), an economiser (24) and an air heater (26) all having tubes (34) and comprising the at least one heat recovery heat exchanger, the tubes (34) being coated with catalytic material (32).

BAD ORIGINAL

Fig. 1

Fig. 2